# FASCICULE DE BREVET EUROPEEN

(11) **EP 3 190 874 B1**
(45) Date de publication et mention de la délivrance du brevet: **24.10.2018**
(21) Numéro de dépôt: 15780915.3
(22) Date de dépôt: 08.09.2015
(51) Int. Cl.: A01K 17/00

(54) **APPAREIL D'ÉCORNAGE ÉLECTRIQUE PRÉSENTANT UNE LAME CHAUFFANTE CIRCULAIRE SUR 360°**
ELEKTRISCHE ENTHORNUNGSVORRICHTUNG MIT EINER 360°-KREISFÖRMIGEN ERWÄRMUNGSKLINGE
ELECTRICAL DEHORNING APPLIANCE COMPRISING A 360° CIRCULAR HEATING BLADE

(30) Priorité: 12.09.2014 FR 1458591
(43) Date de publication de la demande: 19.07.2017
(73) Titulaire: Guilbert Express, 94120 Fontenay Sous Bois (FR)
(72) Inventeur: FONCHAIN, Pascal, F-86300 Bonnes (FR)
(74) Mandataire: Gicquel, Frédéric
(86) Numéro de dépôt international: PCT/FR2015/052375
(87) Numéro de publication internationale: WO 2016/038290

(56) Documents cités:
- FR-A1- 2 951 612
- GB-A- 813 159
- US-A- 2 763 762
- US-A- 2 779 854

## Description

Le domaine de l'invention est celui de la conception et de la fabrication des équipements pour l'élevage de bétail. Plus précisément, l'invention concerne un appareil pour écorner les animaux d'élevage, et en particulier mais non exclusivement, pour écorner les bovins.

Dans le domaine de l'invention, il est classique de supprimer les cornes des animaux à cornes, ceci pour éviter des risques de blessures susceptibles d'être causées par les animaux entre eux, ou par les animaux aux humains.

Bien entendu, la technique de l'écornage est principalement pratiquée dans l'élevage bovin, mais peut être également transposée à d'autres types d'élevage d'animaux à cornes, avec de simples adaptations fonctionnelles et/ou modifications des paramètres de fonctionnement.

Actuellement, on pratique traditionnellement l'écornage, dans les élevages bovins, dans les trois premières semaines après la naissance des veaux, pour intervenir de préférence à un stade où les cornes n'ont pas encore poussé et qu'elles sont encore à l'état de cornillons. Ceux-ci sont visibles une fois qu'ils ont traversé le cuir de l'animal, mais l'écornage précoce est destiné à les atteindre justement avant qu'ils aient traversé le cuir de l'animal pour stopper la pousse des cornillons.

Parmi les techniques d'écornage existantes, il en est une qui consiste à appliquer un élément chauffant autour du cornillon, en vue de détruire toute irrigation sanguine du cornillon, et par conséquent, d'en stopper la pousse.

Le document de brevet publié sous le numéro FR-2 951 612 décrit un appareil d'écornage électrique correspond à cette approche technique.

Selon la technique décrit par ce document, le dispositif prend la forme d'un appareil électroportatif en forme de pistolet, dont une partie constitue le manche et l'autre partie le corps de l'appareil portant à son destinée à brûler la périphérie du cornillon, cette lame circulaire s'étendant entre deux extrémités ménageant entre elles un écartement angulaire de l'ordre d'une dizaine de degrés, une patte de connexion s'étendant à partir de chaque extrémité de la lame circulaire.

Un tel choix de conception tend effectivement à s'imposer pour que la lame chauffante puisse s'apparenter à une résistance ohmique s'étendant entre deux bornes.

Avec un tel dispositif, l'utilisateur applique la lame chauffante circulaire sur le cornillon, au travers du cuir, ou pas, et transmet au manche de l'appareil un mouvement de rotation apte à faire tourner la lame circulaire autour du cornillon, ceci pour brûler la portion angulaire s'étendant entre les extrémités de la lame circulaire et, ainsi, appliquer la brûlure tout autour du cornillon.

Dans la pratique, il s'avère que la gestuelle permettant d'appliquer la brûlure exercée par la lame chauffante tout autour du cornillon n'est pas toujours correctement exécutée, auquel cas il peut être constaté des cas de repousse partielle des cornillons.

De tels cas de repousse sont détectés seulement après que le cornillon ait traversé le cuir de l'animal. En tout état de cause, cela implique une deuxième intervention sur l'animal concerné, cette deuxième intervention s'avérant généralement assez traumatisante pour l'animal.

Il en est de même avec l'appareil selon la technique décrite par le document US - 2 779 854.

Il est connu de l'art antérieur un appareil d'écornage décrit par le document de brevet publié sous le numéro GB - 813 159 prenant la forme générale d'un pistolet, avec une poignée surmontée par un fût présentant une ouverture au travers de laquelle s'étend une trompe évasée réalisée en un matériau apte à chauffer suffisamment pour brûler la périphérie d'un cornillon. Selon un mode de réalisation, la résistance électrique s'étend à l'intérieur de la trompe qui forme une spire au contact de l'extrémité active de la trompe.

Selon cet art antérieur, ce n'est donc pas la résistance électrique qui est directement au contact du cornillon, mais la trompe évasée qui est chauffée par la résistance électrique. Il en résulte une éventuelle perte de rendement thermique et/ou une consommation électrique importante pour obtenir un résultat satisfaisant en termes de brûlure du cornillon.

Un tel inconvénient est également présent dans un appareil selon la technique décrite par le document US - 2 763 762.

L'invention a notamment pour objectif de pallier les inconvénients de l'art antérieur.

Plus précisément, l'invention a pour but de proposer un appareil d'écornage électrique qui garantisse la suppression de chaque cornillon traité, sans risque de repousse ou quasiment, ceci sans qu'il soit nécessaire pour l'utilisateur de maîtriser une quelconque gestuelle.

L'invention a également pour objectif de fournir un tel appareil d'écornage qui puisse être proposé dans une version électroportative.

L'invention a aussi pour objectif de fournir un tel appareil d'écornage qui soit peu coûteux à réaliser.

Encore un autre objectif de l'invention est de proposer un procédé de fabrication d'une lame chauffante pour un appareil d'écornage selon l'invention.

Ces objectifs, ainsi que d'autres qui apparaîtront par la suite, sont atteints grâce à l'invention selon la revendication 1, qui a pour objet un appareil d'écornage électrique, du type comprenant un élément chauffant constitué par une lame chauffante annulaire formant résistance électrique alimentée par des moyens d'alimentation électrique, la lame chauffante étant reliée électriquement aux moyens d'alimentation électrique par une paire d'éléments de liaison électrique, caractérisé en ce que la lame chauffante s'étend de façon circulaire sur 360° et est couplé à deux pattes de connexion électrique rigides diamétralement opposées.

Ainsi, grâce à l'invention, la simple application de la lame chauffante sur le cornillon permet, en un seul geste, de réaliser une brûlure tout autour du cornillon.

Contrairement à l'art antérieur, il n'est pas nécessaire de maîtriser une gestuelle particulière pour réaliser efficacement l'écornage.

En d'autres termes, avec un appareil d'écornage électrique selon l'invention, on améliore notablement l'efficacité de l'opération d'écornage,

En d'autres termes, avec un appareil d'écornage électrique selon l'invention, on améliore notablement l'efficacité de l'opération d'écornage, et on tend vers un résultat avec aucun risque de repousse, même partielle, des cornillons.

En outre, on note que l'invention propose un appareil d'écornage électrique avec une lame chauffante électrique d'une conception à l'encontre des pratiques traditionnelles de réalisation des lames chauffantes annulaires. En effet, la lame chauffante selon l'invention forme un cercle fermé, contrairement à l'art antérieur, avec des bornes de connexion assurant, comme cela va être expliqué plus en détail par la suite, une parfaite homogénéité de résistance ohmique sur 360°, assurant une brûlure homogène du cornillon sur tout son pourtour.

Avantageusement, la lame chauffante présente une première phase destinée à être amenée au contact d'une corne, et une deuxième face opposée à la première, les pattes de connexion s'étendant à partir de la deuxième face.

De cette façon, on restreint la surface destinée à pénétrer le cuir de l'animal au seul cercle constitué par la lame chauffante, ce qui tend à faciliter l'opération d'écornage et à limiter le traumatisme de l'animal.

Avantageusement, les pattes de connexion s'étendent orthogonalement aux points définis par la lame chauffante.

Préférentiellement, les pattes de connexion présentent chacune une portion plate formant interface de fixation avec l'un des éléments de liaison.

Selon un mode de réalisation particulièrement avantageux, la lame circulaire et les deux pattes de connexion sont intégrés à une même pièce métallique constituant un circuit fermé dont la continuité est exempte de liaison par soudure.

En d'autres termes, comme cela va être explicité plus en détails par la suite, la pièce incluant l'élément chauffant, et regroupant la lame chauffante et les pattes de connexion, est obtenue à partir d'une même plaque métallique et d'une seule pièce.

L'absence de soudure pour fermer le circuit contribue à l'efficacité de la lame chauffante électrique, en ce sens que l'on n'introduit dans le circuit aucune hétérogénéité sur le plan de la résistance ohmique susceptible de se traduire au niveau du cercle formé par la lame chauffante, par une différence d'ampérage entre les deux chemins (demi-cercles) reliant les bornes (ce qui pourrait conduire, partiellement, à une brûlure imparfaite et, par conséquent, à un risque de repousse partielle du cornillon).

Dans ce cas, la lame circulaire est avantageusement constituée par deux demi-cercles accolés pour formés un cercle, chaque demi-cercles s'étendant entre deux extrémités diamétralement opposées, chacune de ces deux extrémités étant reliées par un pli à une couche de patte de connexion à une patte de connexion identique reliée par un pli à l'autre demi-cercle, les deux couches étant reliées par un pli à leur base opposée aux demi-cercles.

On obtient donc de cette façon une pièce, incluant la lame chauffante et les lames de connexion qui, s'avère simple de conception et peu coûteuse à réaliser.

Selon une autre caractéristique avantageuse, les portions plates sont chacune reliées aux demi-cercles par une portion de liaison de largeur inférieure à la largeur des portions plates.

Ainsi, la portion de largeur réduite peut constituer avantageusement une zone de pliage facilitant la mise en forme de la pièce incluant la lame chauffante avec les pattes de connexion.

Dans ce cas, la portion de liaison présente préférentiellement une forme en U, constituée par des branches reliées par une base, les deux branches s'étendant dans un corps orthogonal au plan des demi-cercles, l'une des branches étant reliée à un demi-cercle et l'autre branche étant reliée à une portion plate.

Selon un mode de réalisation particulier, les portions plates sont déportées en côté de la lame chauffante.

Ainsi, la lame circulaire présente une configuration particulièrement adaptée au mode de fabrication décrit ci-après.

L'invention selon la revendication 10 concerne également un procédé de fabrication d'une lame circulaire pour un appareil d'écornage tel que décrit précédemment, caractérisé en ce qu'il comprend les étapes de :
- découpe d'un circuit fermé dans une plaque métallique, le circuit présentant deux paires de bords opposé et présentant une symétrie autour d'un axe médian ;
- repliement incurvé d'une première des paires de bords pour leur donner une forme de demi-cercle ;
- pliage de l'autre paire de bords autour de l'axe médian de façon à amener les deux parties pliées l'une contre l'autre.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels:
- la figure 1 est une vue en perspective d'ensemble d'un exemple de réalisation d'un appareil d'écornage selon l'invention ;
- la figure 2 est une vue d'un sous-ensemble d'un appareil d'écornage selon l'invention ;
- la figure 3 est une vue d'une pièce incluant la lame chauffante circulaire destinée à être intégrée à un appareil d'écornage selon l'invention ;
- les figures 4 à 7 sont des vues des étapes successives d'une pièce incluant une lame chauffante circulaire destinée à être intégrée à un appareil d'écornage selon l'invention.

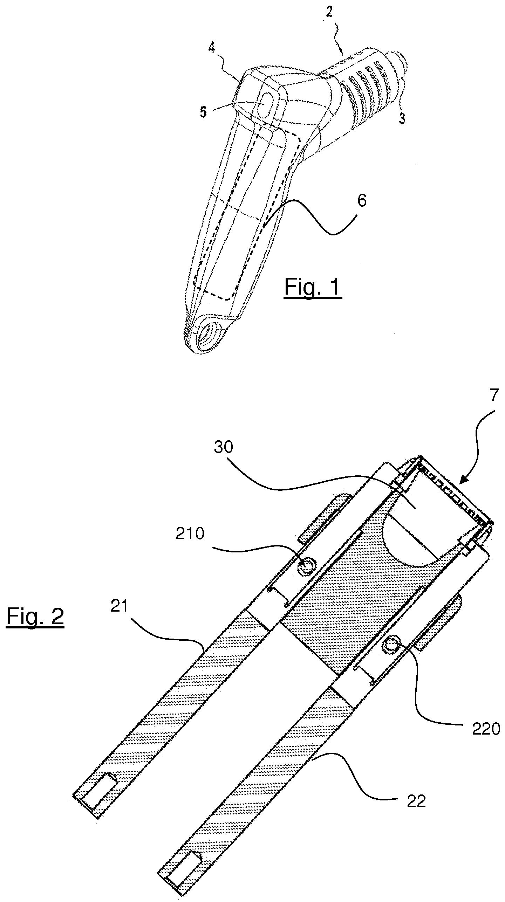

En référence à la figure 1, on décrit un mode de réalisation d'écornage selon l'invention, prenant en l'occurrence une configuration d'ensemble à la façon d'un pistolet, comprenant classiquement :
- un manche, destiné à être tenu à la main par l'utilisateur ;
- une tête d'écornage 2, formant donc, selon le présent mode de réalisation, un L avec le manche et présentant un embout 3 destiné à être appliqué sur la tête d'un animal à cornes, à l'emplacement précis d'un cornillon.

Le boîtier de l'appareil d'écornage présente sur sa surface extérieure un bouton de commande 5, pouvant bien entendu être positionné en diverses endroits sur le boîtier, et étant destiné à être actionné pour commander l'alimentation électrique de la lame chauffante de l'appareil.

Le compartiment interne du manche est destiné à former un logement recevant une batterie rechargeable formant des moyens d'alimentation électrique 6 de la lame chauffante de l'appareil. La batterie rechargeable peut par exemple être reliée par l'intermédiaire d'une prise de raccordement, à un réseau électrique extérieur, accessible par un volet ouvrant 4 à l'arrière de l'appareil.

On note que le boîtier de l'appareil renferme de plus une carte électronique conçue pour assurer la régulation de l'alimentation électrique, en vue notamment de :
- délivrer un courant électrique constant à la lame chauffante ;
- optimiser la capacité de la batterie, pour assurer un nombre de cycles prédéterminés (de l'ordre de 160 cycles) et pour une intensité de courant relativement importante (de l'ordre de 60A) ;
- piloter des temps de cycle ;

Le boîtier, dans la partie de l'appareil correspondant à la tête d'écornage, présente des fenêtres de refroidissement, et intègre un corps de chauffe assurant la liaison électrique entre la batterie rechargeable de l'appareil et la lame chauffante (qui forme une résistance électrique).

Ce corps de chauffe est illustré en partie par la figure 2, et comprend une paire d'éléments de liaison électrique 21, 22 reliée aux deux bornes de polarité opposées de la batterie de l'appareil.

En pratique, ces éléments de liaison électrique 21 et 22 sont constitués par des tiges métalliques, électriquement conductrices, constituant donc les broches d'alimentation électrique de la lame chauffante 7 de l'appareil. Ainsi, la batterie rechargeable forme des moyens d'alimentation électrique 6 de la lame chauffante, qui peuvent varier selon d'autres modes de réalisation envisageables, par exemple en reliant la lame chauffante de l'appareil à un réseau électrique extérieur (par l'intermédiaire des éléments de liaison électrique 21 et 22).

En tout état de cause, la lame chauffante est reliée électriquement au moyen d'alimentation électrique de l'appareil par l'intermédiaire des pattes de connexion, de telle sorte que la lame chauffante forme avec les pattes de connexion une portion de circuit électrique.

Les éléments de liaison électriques 21, 22 présentent chacun une extrémité fendue, la forme correspondante formant un logement dans lequel est destinée à venir s'encastrer une portion plate des pattes de connexion électrique auquel est couplé la lame chauffante.

Par ailleurs, tel que cela apparaît sur la figure 2, la lame chauffante 7 est supportée par un support 30, de préférence en céramique, de part et d'autre duquel s'étendent les pattes de connexion 70 couplées à la lame chauffante 7. L'ensemble regroupant le support, les pattes de connexion et la lame chauffante forme l'embout 3 mentionné précédemment.

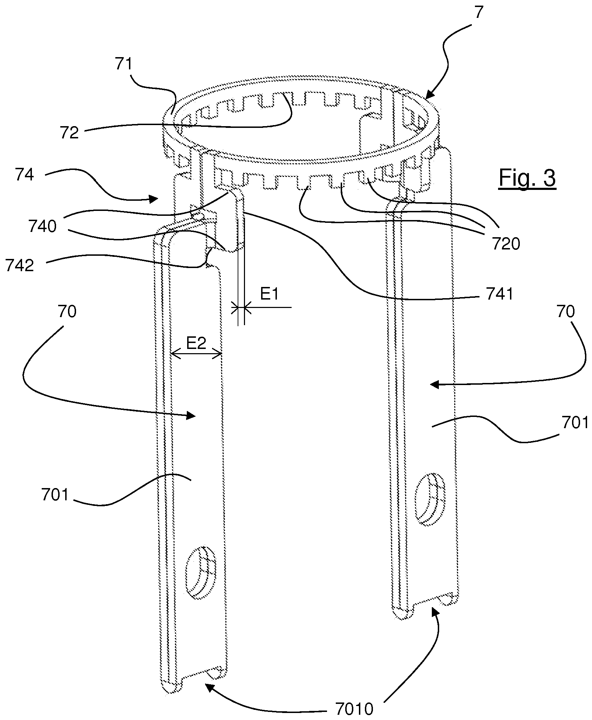

Selon le principe de l'invention, la lame chauffante 7 s'étend de façon circulaire sur 360° (figure 3), et est couplée à deux pattes de connexion 70, électriques et rigides diamétralement opposées par rapport au cercle de la lame chauffante.

Telle qu'illustrée par la figure 3, la lame chauffante présente une première face 71 destinée à être amenée au contact d'une corne et une deuxième face 72, opposée à la première, à partir de laquelle les pattes de connexion 70 s'étendent, ceci orthogonalement au plan défini par la lame chauffante 7.

Selon le présent mode de réalisation, une pluralité d'ergots 720 régulièrement repartis s'étendent à partir de la face 72 et orthogonalement à la face définie par cette dernière.

Le nombre et les dimensions peuvent varier autant que de besoin. Leur fonction est d'optimiser la diffusion de la chaleur, ceci en optimisant la répartition de la chaleur sur les 360° de la larre chauffante.

Tel que cela apparaît sur la figure 3, les pattes de connexion présentent chacune une portion plate 701 formant une interface de fixation avec l'un des éléments de liaison 21, 22.

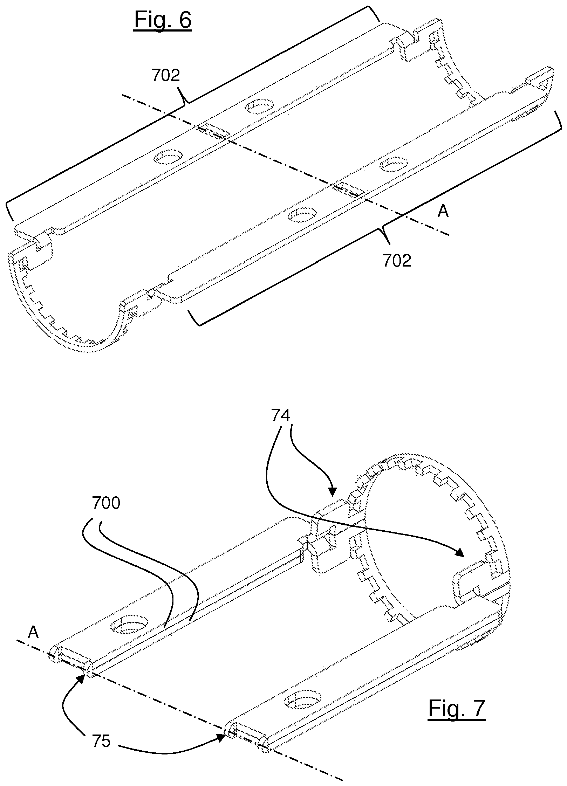

Tel que cela apparaît clairement sur les figures 3 et 7, les portions plate 701 présentent chacune à leur base un évidement 7010, destiné à faciliter le pliage effectué lors du procédé de fabrication de la lame chauffante décrit par la suite.

Ainsi, comme mentionné précédemment, les éléments de liaison 21, 22 présentant une fente à leur extrémité, les portions plates présentent une épaisseur identique au jeu près, à l'espace interne de chaque fente. Les portions plates viennent donc s'encastrer dans la fente et y sont fixées par l'intermédiaire de vis 210, 220.

Bien entendu, cette liaison par vissage permet le montage de façon amovible de l'embout 3, permettant son remplacement en cas d'usure et/ou de détérioration.

De plus, on note que les pattes de connexion, et en particulier les portions plates 701 des pattes de connexion s'étendent en côté de la lame chauffante. En d'autres termes, si on projette le périmètre de la lame chauffante 7 le long de l'axe central du cercle de la lame chauffante, les portions plates 701 s'étendent hors du périmètre de cette projection, ceci dans un plan diamétral de la lame chauffante.

Il résulte de cette configuration que l'embout 3 sur lequel est monté l'élément chauffant peut être réalisé dans une forme relativement simple.

Selon une caractéristique avantageuse de l'invention, la lame chauffante et les deux pattes de connexion sont intégrées à une même pièce métallique constituant un circuit fermé, dont la continuité est exempte de liaison par soudure.

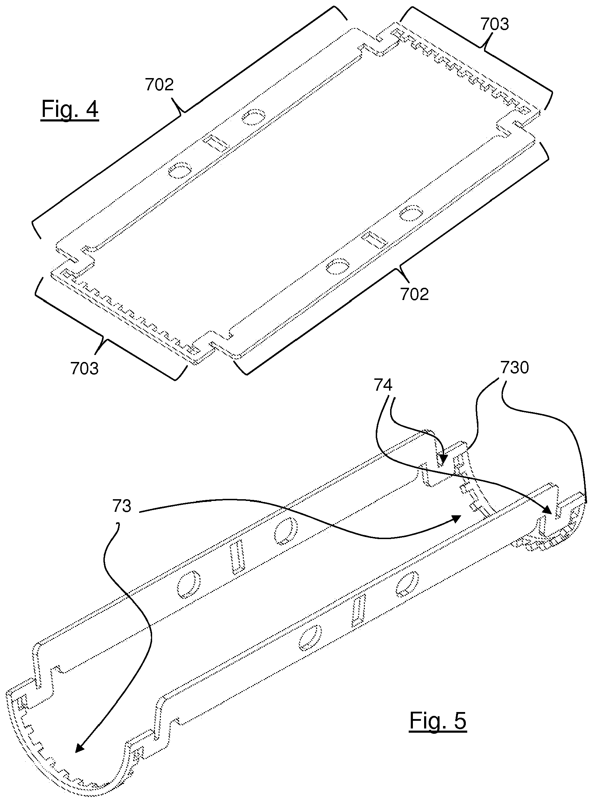

Pour ce faire, selon le présent mode de réalisation, la lame chauffante 7 est constituée par deux demi-cercles accolés par leurs extrémités diamétralement opposées pour constituer un cercle. En outre, chaque extrémité des demi-cercles est reliée à une couche de pattes de connexion, accolée comme cela va être expliqué par la suite en référence aux figures 4 à 7, à une autre couche de pattes de connexion identique et reliée à l'autre demi-cercle, les deux couches étant reliées à leurs bases opposées au demi-cercle par un pli.

On obtient de cette façon un circuit fermé et continu, d'un seul tenant, selon un procédé décrit ci-après.

En référence à la figure 4, on découpe par exemple à l'aide d'une matrice de découpe à l'emporte-pièce, un circuit fermé, constitué pour l'essentiel de quatre côtés répartis en deux paires de côtés opposés, en l'occurrence une paire de « grands côtés » 702 et une paire de « petits côtés » 703.

On note que le circuit fermé réalisé présente une symétrie autour d'un axe médian.

Tel qu'illustré par la figure 5, le circuit métallique initialement plan est roulé sur un demi-cylindre de façon à former deux demi-cercles d'extrémité 73.

Tel qu'illustré par la figure 6, les « grands côtés » 702 sont rabattus par pliage à 90° vers l'extérieur du circut fermé.

Ensuite, tel qu'illustré par la figure 7, les « grands côtés » 702 sont repliés autour de l'axe médian A, jusqu'à amener les deux parties pliées des « grands côtés » l'une contre l'autre. En référence à ce qui a été décrit précédemment, chaque moitié des grands côtés 702 constituent ainsi une couche des pattes de connexion.

Par ailleurs, tel que cela apparaît sur la figure 3, les portions plates 701 sont chacune reliées aux demi-cercles par une portion de liaison 74 dont la largeur E1 est notablement inférieure à la largeur E2 des portions plates. Ceci favorise la mise en forme de l'élément chauffant par la technique de pliage décrite précédemment en référence aux figures 4 à 7.

Plus précisément, les portions de liaison 74 présentent chacune une forme en U, ce U étant constitué par deux branches 740 reliées par une base 741. Les deux branches 740 de la portion de liaison s'étendent dans un plan orthogonal au plan des demi-cercles, l'une des branches 740, en position supérieure étant reliée à un demi-cercle, tandis que l'autre branche, en position inférieure, est reliée à une portion plate 701 de la patte de connexion, ceci par l'intermédiaire d'un pli 742. Ainsi, chaque extrémité 730 des demi-cercles (ces extrémités étant donc diamétralement opposées) est reliée à une couche de patte de connexion par une portion de liaison 74.

Chaque moitié des grands côtés 702, constituant chacune une des deux couches 700 (figure 7) constituant au final une portion plate des pattes de connexion, s'étend donc entre une portion de liaison 74 et un pli 75, reliant les deux couches 700, présent à la base des deux couches situées à l'opposé des demi-cercles.

## Revendications

1. Appareil d'écornage électrique, du type comprenant un élément chauffant constitué par une lame chauffante (7) annulaire formant résistance électrique alimentée par des moyens d'alimentation électrique (6), la lame chauffante étant reliée électriquement aux moyens d'alimentation électrique par une paire d'éléments de liaison électrique (21), (22),
**caractérisé en ce que** la lame chauffante (7) s'étend de façon circulaire sur 360° et est couplé à deux pattes de connexion (70) électrique rigides diamétralement opposées.

2. Appareil d'écornage électrique selon la revendication 1, **caractérisé en ce que** la lame chauffante (7) présente une première face (71) destinée à être amené au contact d'une corne, et une deuxième face (72) opposée à la première, les pattes de connexion (70) s'étendant à partir de la deuxième face (72).

3. Appareil d'écornage électrique selon la revendication 1, **caractérisé en ce que** les pattes de connexion (70) s'étendent orthogonalement au plan défini par la lame chauffante (7).

4. Appareil d'écornage électrique selon la revendication 1, **caractérisé en ce que** les pattes de connexion (70) présentent chacune une portion plate (701) formant interface de fixation avec l'une des éléments de liaison (21), (22).

5. Appareil d'écornage électrique selon la revendication 1, **caractérisé en ce que** la lame chauffante (7) et les deux pattes de connexion (70) sont intégrées à une même pièce métallique constituant un circuit fermé dont la continuité est exempte de liaison par soudure.

6. Appareil d'écornage électrique selon la revendication 5, **caractérisé en ce que** la lame chauffante (7) est constituée par deux demi-cercles (73) accolés pour former un cercle, chaque demi-cercle s'étendant entre deux extrémités diamétralement opposées (730), chacune de ces deux extrémités étant reliée à une couche (700) de patte de connexion (70) accolée à une couche (700) de patte de connexion identique reliée à l'autre demi-cercle, les deux couches étant reliées par un pli (75) à leur base opposée aux demi-cercles (73).

7. Appareil d'écornage électrique selon les revendications 4 et 6, **caractérisé en ce que** les portions plates (701) sont chacune reliées aux demi-cercles (73) par une portion de liaison (74) de largeur inférieure à la largeur des portions plates (701).

8. Appareil d'écornage électrique selon la revendication 7, **caractérisé en ce que** la portion de liaison (74) présente une forme en U, constituées par deux branches reliées (740) par une base (741), les deux branches s'étendant dans un plan orthogonal au plan des demi-cercles (73), l'une des branches étant reliées à un demi-cercle et l'autre branche étant reliée à une portion plate.

9. Appareil d'écornage électrique selon l'une des revendications 4 à 8, **caractérisé en ce que** les portions plates sont déportées en côté de la lame chauffante.

10. Procédé de fabrication d'une lame circulaire pour un appareil d'écornage selon l'une des revendications 1 à 9, **caractérisé en ce qu'**il comprend les étapes de :
- découpe d'un circuit fermé dans une plaque métallique, le circuit présentant deux paires de bords opposés (702), (703) et présentant une symétrie autour d'un axe médian (A) ;
- repliement incurvé d'une première des paires de bords pour leur donner une forme de demi-cercle (73) ;
- pliage de l'autre paire de bords autour de l'axe médian (A) de façon à amener les deux parties pliées l'une contre l'autre.

## Patentansprüche

1. Elektrische Enthornungsvorrichtung, in der Art ein Heizelement umfassend, das durch eine ringförmige Heizklinge (7) gebildet wird, welche einen elektrischen Widerstand bildet, der durch elektrische Versorgungsmittel (6) versorgt wird, wobei die Heizklinge durch ein Paar von elektrischen Verbindungselementen (21), (22) mit den elektrischen Versorgungsmitteln elektrisch verbunden ist, **dadurch gekennzeichnet, dass** sich die Heizklinge (7) kreisförmig über 360° erstreckt und an zwei diametral gegenüberliegenden starren elektrischen Anschlusslaschen (70) gekoppelt ist.

2. Elektrische Enthornungsvorrichtung nach Anspruch 1, **dadurch gekennzeichnet, dass** die Heizklinge (7) eine erste Fläche (71) aufweist, die dazu bestimmt ist, in Kontakt mit einem Horn gebracht zu werden, und eine der ersten gegenüberliegende zweite Fläche (72) wobei sich die Anschlusslaschen (70) aus der zweiten Fläche (72) heraus erstrecken.

3. Elektrische Enthornungsvorrichtung nach Anspruch 1, **dadurch gekennzeichnet, dass** sich die Anschlusslaschen (70) orthogonal zur Ebene erstrecken, die durch die Heizklinge (7) definiert wird.

4. Elektrische Enthornungsvorrichtung nach Anspruch 1, **dadurch gekennzeichnet, dass** die Anschlusslaschen (70) jeweils einen flachen Abschnitt (701) aufweisen, der eine Befestigungsschnittstelle mit einem der Verbindungselemente (21), (22) bildet.

5. Elektrische Enthornungsvorrichtung nach Anspruch 1, **dadurch gekennzeichnet, dass** die Heizklinge (7) und die zwei Anschlusslaschen (70) in ein selbes Metallteil integriert sind, das einen geschlossenen Kreislauf bildet, dessen Durchgängigkeit von einer Schweißverbindung ausgenommen ist.

6. Elektrische Enthornungsvorrichtung nach Anspruch 5, **dadurch gekennzeichnet, dass** die Heizklinge (7) durch zwei aneinandergefügte Halbkreise (73) gebildet wird, um einen Kreis zu bilden, wobei sich jeder Halbkreis zwischen zwei diametral gegenüberliegenden Enden (730) erstreckt, wobei jedes dieser zwei Enden mit einer Schicht (700) einer Anschlusslasche (70) verbunden ist, die mit einer identischen Schicht (700) einer Anschlusslasche aneinandergefügt ist, die mit dem anderen Halbkreis verbunden ist, wobei die zwei Schichten durch einen Knick (75) an ihrer den Halbkreisen (73) gegenüberlegenden Basis verbunden sind.

7. Elektrische Enthornungsvorrichtung nach den Ansprüchen 4 und 6, **dadurch gekennzeichnet, dass** die flachen Abschnitte (701) jeweils durch einen Verbindungsabschnitt (74) mit einer kleineren Breite als der Breite der flachen Abschnitte (701) mit den Halbkreisen (73) verbunden sind.

8. Elektrische Enthornungsvorrichtung nach Anspruch 7, **dadurch gekennzeichnet, dass** der Verbindungsabschnitt (74) eine U-Form aufweist, durch zwei durch eine Basis (741) verbundene Äste (740) gebildet, wobei sich die zwei Äste in einer Ebene orthogonal zur Ebene der Halbkreise (73) erstrecken, wobei einer der Äste mit einem Halbkreis verbunden ist und der andere Ast mit einem flachen Abschnitt verbunden ist.

9. Elektrische Enthornungsvorrichtung nach einem der Ansprüche 4 bis 8, **dadurch gekennzeichnet, dass** die flachen Abschnitte auf Seiten der Heizklinge ausweichen.

10. Verfahren zur Herstellung einer kreisförmigen Klinge für eine Enthornungsvorrichtung nach einem der Ansprüche 1 bis 9, **dadurch gekennzeichnet, dass** es die folgenden Schritte umfasst:
- Ausschneiden eines geschlossenen Kreislaufs aus einer Metallplatte, wobei der Kreislauf zwei gegenüberliegende Ränderpaare (702), (703) aufweist und eine Symmetrie um eine Mittelachse (A) aufweist;
- Geschwungenes Knicken eines ersten der Ränderpaare um ihnen eine Halbkreisform (73) zu verleihen;
- Falzen des anderen Ränderpaars um die Mittelachse (A), um die beiden gefalzten Abschnitte einander zuzuführen.

## Claims

1. Electrical callus removal device, of the type comprising a heating element constituted by an annular heating blade (7) forming electrical resistance supplied by electrical power means (6), the heating blade being electrically connected to the electrical power means by a pair of electrical connection elements (21), (22), **characterised in that** the heating blade (7) extends circularly over 360° and is coupled with two diametrically opposite rigid electrical connecting feet (70) .

2. Electrical callus removal device according to claim 1, **characterised in that** the heating blade (7) has a first face (71) intended to be brought into contact with a callus, and a second face (72) opposite the first, the connecting feet (70) extending from the second face (72).

3. Electrical callus removal device according to claim 1, **characterised in that** the connecting feet (70) extend orthogonally to the plane defined by the heating blade (7) .

4. Electrical callus removal device according to claim 1, **characterised in that** the connecting feet (70) each have a flat portion (701) forming an interface for attaching with one of the connecting elements (21), (22).

5. Electrical callus removal device according to claim 1, **characterised in that** the heating blade (7) and the two connecting feet (70) are integrated to one same metal part constituting a closed circuit, of which the continuity is exempt from connection by welding.

6. Electrical callus removal device according to claim 5, **characterised in that** the heating blade (7) is constituted by two semi-circles (73) welded to form a circle, each semi-circle extending between two diametrically opposite ends (730), each of these two ends being connected to a layer (700) of connecting foot (70) welded to a layer (700) of identical connecting foot connected to the other semi-circle, the two layers being connected by a fold (75) at the base thereof opposite the semi-circles (73).

7. Electrical callus removal device according to claims 4 and 6, **characterised in that** the flat portions (701) are each connected to the semi-circles (73) by a connecting portion (74) of width less than the width of the flat portions (701) .

8. Electrical callus removal device according to claim 7, **characterised in that** the connecting portion (74) has a U-shape, constituted by two arms connected (740) by a base (741), the two arms extending in a plane orthogonal to the plane of the semi-circles (73), one of the arms being connected to a semi-circle and the other arm being connected to a flat portion.

9. Electrical callus removal device according to one of claims 4 to 8, **characterised in that** the flat portions are moved to the side of the heating blade.

10. Method for producing a circular blade for a callus removal device according to one of claims 1 to 9, **characterised in that** it comprises steps of:
- cutting a closed circuit in a metal plate, the circuit having two pairs of opposite edges (702), (703) and having a symmetry around a median axis (A);
- curved folding of a first of the pairs of edges to give them a semi-circle shape (73);
- folding the other pair of edges around the median axis (A) so as to bring the two folded parts against one another.
